# EUROPEAN PATENT SPECIFICATION

(11) **EP 2 230 417 B1**
(45) Date of publication and mention of the grant of the patent: **28.08.2019**
(21) Application number: 08864368.9
(22) Date of filing: 22.12.2008
(51) Int. Cl.: F16F 9/14, A47K 13/12, E05F 3/08, E05F 3/14, E05F 5/00

(54) **DAMPER APPARATUS**
DÄMPFUNGSVORRICHTUNG
DISPOSITIF AMORTISSEUR

(30) Priority: 26.12.2007 JP 2007334613
(43) Date of publication of application: 22.09.2010
(73) Proprietor: Sugatsune Kogyo Co., Ltd., Tokyo 101-8633 (JP)
(72) Inventor: OGAWA, Masaki, Tokyo 101-8633 (JP)
(74) Representative: Small, Gary James
(86) International application number: PCT/JP2008/073277
(87) International publication number: WO 2009/081894

(56) References cited:
- JP-A- 2 274 216
- JP-A- 2 274 216
- JP-U- 2 016 839
- JP-U- 5 067 840

## Description

### TECHNICAL FIELD

The present invention relates to a damper apparatus for maintaining the speed of displacement in one direction of two members that can be displaced with respect to each other at a low speed.

### BACKGROUND ART

This type of damper apparatus generally includes a damper body including a receiving hole formed therein, a piston movably disposed in the receiving hole and divides an inner space of the receiving hole into a first chamber and a second chamber, fluid filled in the first and second chambers, a communication passage communicating between the first and second chambers and allowing the fluid to flow therein substantially without resistance, a valve mechanism that opens the communication passage when the piston is moved in a direction from the first chamber to the second chamber and closes the communication passage when the piston is moved in a direction from the second chamber to the first chamber and a resistance passage that communicates the first chamber with the second chamber and allows the fluid to flow therein with a predetermined amount of resistance. A fitting recess annularly extending in a circumferential direction is formed in an outer peripheral surface of the piston. A seal member made of an elastic material and having an annular configuration is fitted in the fitting recess. An outer peripheral portion of the seal member is press-contacted with an inner peripheral surface of the receiving hole. By this arrangement, a gap between the inner peripheral surface of the receiving hole and the outer peripheral surface of the piston is sealed.

When a damper apparatus having the above described features are used, the damper body is connected to one of two members that can be displaced with respect to each other and the piston is connected to the other. When the two members are displaced in one direction, the piston is moved in a direction from the second chamber to the first chamber. This causes the valve mechanism to close the communication passage, causing the fluid in the first chamber to flow into the second chamber through the resistance passage. Flow resistance generated when the fluid flows through the resistance passage maintains the speed of movement of the piston at a low speed, thereby maintaining a displacement speed of the two members in the one direction at a low speed. When the two members are displaced in the other direction, the piston is moved in a direction from the first chamber to the second chamber. This causes the valve mechanism to open the communication passage, allowing the fluid in the second chamber to flow into the first chamber substantially without resistance, thus allowing the piston to be moved at a high speed. Therefore, the two members can be displaced in the other direction at a high speed.

### PATENT DOCUMENTS

Patent Document 1: Japanese Patent Application Publication No.H10-331895

Japanese Patent Application Publication No. 2-274216 A discloses a damper device and open/close device for a seat, in which, when a seat is turned towards a user, a rotary shaft turns in a reverse direction, and a piston shifts to a compression direction. As a result, an air flow through a vent hole is interrupted. Air in a forward chamber of a cylinder, therefore, flows into a rear chamber due to throttling with an orifice of a piston, and a braking force works during the air flow.

### SUMMARY OF INVENTION

### TECHNICAL PROBLEM

In the conventional rotary damper described above, the seal member disposed in the piston is press-contacted with the inner peripheral surface of the receiving hole. As a result, a considerable friction resistance is generated between the seal member and the inner peripheral surface of the receiving hole. Particularly, when the piston is in a stopped condition, a considerable static friction resistance can be generated. Therefore, a considerable force may be required to move the piston in the static condition. This leads to a problem that in cases such as when the two members are to be manually displaced, the members may not be easily moved during the initial phase of displacement.

### SOLUTION TO PROBLEM

To solve the problem mentioned above, the present invention provides a damper apparatus including a damper body having a receiving hole formed therein, a piston movably disposed in the receiving hole and dividing an inner space of the receiving hole into a first chamber and a second chamber, fluid filled in the first chamber and the second chamber, a communication passage that communicates the first chamber with the second chamber and allows the fluid to flow in the communication passage substantially without resistance, a valve mechanism that opens the communication passage when the piston is moved in a direction from the first chamber to the second chamber and closes the communication passage when the piston is moved in a direction from the second chamber to the first chamber, a resistance passage that communicates the first chamber with the second chamber and provides the fluid flowing in the resistance passage with a predetermined amount of resistance, a fitting recess formed in an outer peripheral surface of the piston and extending annularly in a circumferential direction, and a seal member made of an elastic material and having an annular configuration, the seal member received in the fitting recess, characterized in that a width of the fitting recess is sized to be greater than a width of the seal member in a moving direction of the piston so that the seal member can be moved inside the fitting recess in the moving direction of the piston, an outer peripheral portion of the seal member is press-contacted with an inner peripheral surface of the receiving hole by an elasticity of the seal member at least when the seal member is positioned in an end portion of the fitting recess in the second chamber side, and a friction resistance generated between the outer peripheral portion of the seal member and the inner peripheral surface of the receiving hole is greater than a friction resistance generated between an inner peripheral portion of the seal member and a bottom surface of the fitting recess.

In this case, it is preferable that the outer peripheral portion of the seal member is press-contacted with the inner peripheral surface of the receiving hole over an entire range of transfer of the seal member and, at any point in the width direction of the fitting recess, the friction resistance generated between the outer peripheral portion of the seal member and the inner peripheral surface of the receiving hole is greater than the friction resistance generated between the inner peripheral portion of the seal member and the bottom surface of the fitting recess.

It is also preferable that a diameter of the bottom surface of the fitting recess is sized to be greater in one end side of the fitting recess than in the other end side of the fitting recess and the inner peripheral portion of the seal member is press-contacted with the bottom surface of the fitting recess over the entire range of transfer of the seal member by the elasticity of the seal member.

### ADVANTAGEOUS EFFECTS OF INVENTION

According to the present invention having the above-mentioned features, when the seal member is positioned in an end portion of the fitting recess in the second chamber side, the friction resistance generated between the outer peripheral portion of the seal member and the inner peripheral surface of the receiving hole is greater than the friction resistance generated between the inner peripheral portion of the seal member and the bottom surface of the fitting recess. Therefore, when the piston is moved in a direction from the first chamber to the second chamber, the seal member is relatively moved with respect to the piston while being maintained in the stopped condition in contact with the inner peripheral surface of the receiving hole. To be more specific, during the initial phase of the movement of the piston in the direction from the first chamber to the second chamber, the piston is not affected by the friction resistance generated between the seal member and the inner peripheral surface of the receiving hole. The piston is affected only by a smaller friction resistance, i.e. the friction resistance generated between the inner peripheral portion of the seal member and the bottom surface of the fitting recess. Therefore, the piston can be easily moved in the direction from the first chamber to the second chamber.

### BRIEF DESCRIPTION OF DRAWINGS

FIG. 1 is a front view of an embodiment of a rotary damper according to the present invention.
FIG. 2 is a side view of the embodiment.
FIG. 3 is a cross-sectional view taken along line X-X of FIG. 2 showing the embodiment with a piston positioned at a first position and a valve body positioned at an open-valve position.
FIG. 4 is a cross-sectional view similar to FIG. 3 showing the embodiment with the piston positioned at a second position and the valve body positioned at the open-valve position.
FIG. 5 is a cross-sectional view similar to FIG. 3 showing the embodiment with the piston in the process of being moved from the second position to the first position.
FIG. 6 is a cross-sectional view similar to FIG. 3 showing the embodiment with the piston positioned at the first position and the valve body positioned at a closed-valve position.
FIG. 7 is an exploded perspective view of the embodiment.
FIG. 8 shows a rotor used in the embodiment. FIG. 8(A) is a front view of the rotor; FIG. 8(B) is a side view of the rotor; FIG. 8(C) is a cross-sectional view taken along line C-C of FIG. 8(A); and FIG. 8(D) is a cross-sectional view taken along line D-D of FIG. 8(B).
FIG. 9 shows the piston used in the embodiment. FIG. 9(A) is a front view of the piston; FIG. 9(B) is a side view of the piston; FIG. 9(C) is a plan view of the piston; and FIG. 9(D) is a cross-sectional view taken along line D-D of FIG. 9(A).
FIG. 10 is an enlarged cross-sectional view taken along line X-X of FIG. 1 with a remaining portion of a flat surface portion contacted with a flat portion.
FIG. 11 is a view similar to FIG. 10 with an inclined surface portion contacted with the flat portion.
FIG. 12 is a development view of a main portion showing the relationship between the rotor and the piston when the rotor is in the closed position.
FIG. 13 is a view similar to FIG. 12 with the rotor in the standing position.
FIG. 14 is a view similar to FIG. 12 with the rotor rotated from the standing position in an opening direction through an abutment angle.
FIG. 15 is a view similar to FIG. 12 with the rotor in an open position.
FIG. 16 is an enlarged cross-sectional view of a first embodiment of a receiving hole, a fitting recess and a seal member.
FIG. 17 is an enlarged cross-sectional view of a second embodiment of the receiving hole, the fitting recess and the seal member.
FIG. 18 is an enlarged cross-sectional view of a third embodiment of the receiving hole, the fitting recess and the seal member.
FIG. 19 is an enlarged cross-sectional view of a fourth embodiment of the receiving hole, the fitting recess and the seal member.
FIG. 20 is an enlarged cross-sectional view of a fifth embodiment of the receiving hole, the fitting recess and the seal member.
FIG. 21 is an enlarged cross-sectional view of a sixth embodiment of the receiving hole, the fitting recess and the seal member.
FIG. 22 is an enlarged cross-sectional view of a seventh embodiment of the receiving hole, the fitting recess and the seal member.

### REFERENCE SIGNS LIST

- 1: rotary damper
- 2: casing (damper body)
- 2a: receiving hole
- 3d: through hole (communication passage)
- 3e: valve seat
- 4: piston
- 4i: fitting recess
- 6A: first chamber
- 6B: second chamber
- 9: coil spring (biasing means)
- 10: valve body
- 11: seal member

### DESCRIPTION OF EMBODIMENTS

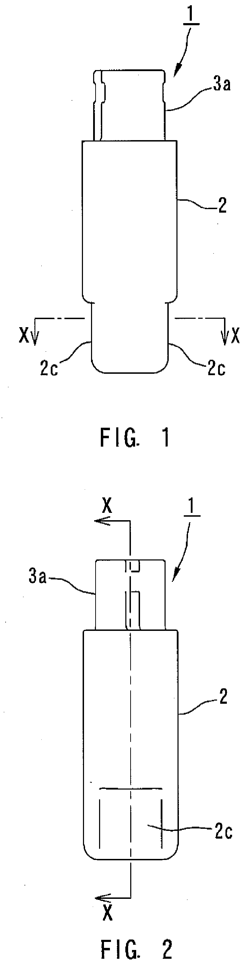

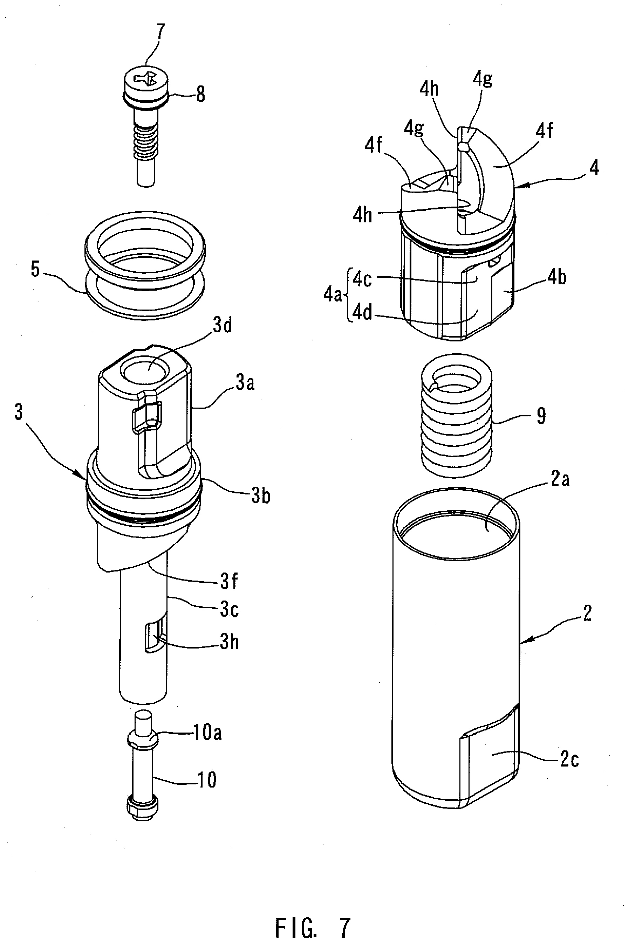

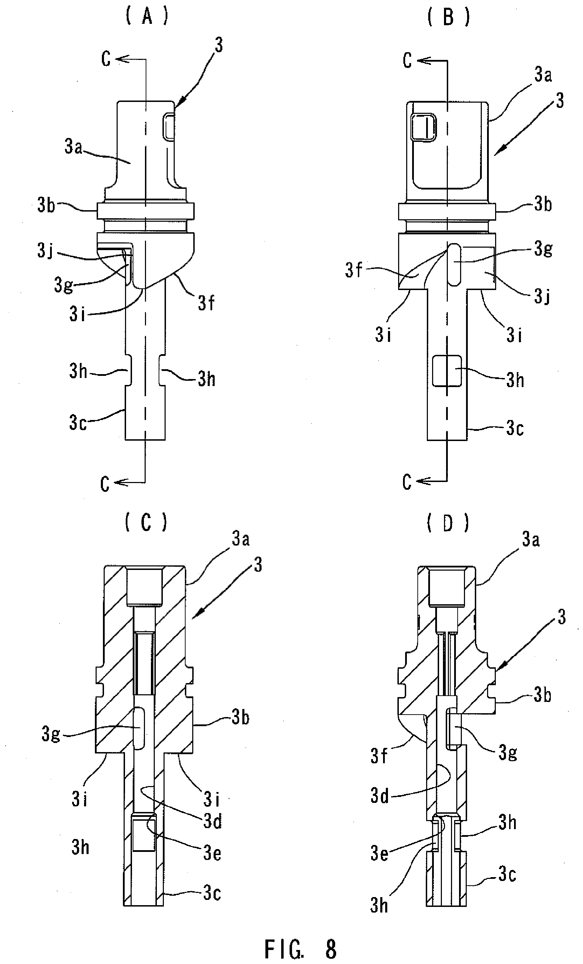

A best mode for carrying out the present invention will be described hereinafter with reference to attached FIGS. 1 to 15.

As shown in FIGS. 1 to 7, a rotary damper 1 according to the present invention includes a casing (damper body) 2, a rotor 3 and a piston 4.

As shown in FIGS. 1 to 7, the casing 2 is composed of a metal cylindrical body having a circular cross-sectional configuration. An inner space of the casing 2 is a receiving hole 2a. The receiving hole 2a includes an opening in one end portion thereof (upper end portion in FIGS. 1 to 7) (top-bottom direction hereinafter refers to a top-bottom direction in FIGS. 1 to 6) and includes a bottom portion 2b in a lower end portion thereof. A pair of flat portions (stopper means) 2c, 2c opposed to each other are formed in a lower end portion of an outer peripheral portion of the casing 2. The pair of flat portions 2c, 2c are symmetrically arranged with respect to an axis of the casing 2 and extend parallel to the axis of the casing 2.

As shown in FIGS. 1 to 7 and FIG. 8, the rotor 3 includes a connecting portion 3a, a large-diameter portion 3b and a small-diameter portion 3c. The connecting portion 3a, the large-diameter portion 3b and the small-diameter portion 3c all have a circular cross-sectional configuration, and are coaxially arranged from top to bottom in this order. The large-diameter portion 3b is fitted to an end portion in the opening side of an inner peripheral surface of the casing 2 in a rotatable but retained manner with the connecting portion 3a protruding upward out of the casing 2 and the small-diameter portion 3c received in the casing 2. By this arrangement, the casing 2 and the rotor 3 are rotationally connected to each other. A gap between the inner peripheral surface of the casing 2 and an outer peripheral surface of the rotor 3 is sealed with a seal member 5 such as an O-ring.

The casing 2 and the connecting portion 3a of the rotor 3 are respectively non-rotatably connected to one and the other of two members that are rotatably connected with respect to each other, such as a toilet body and a toilet lid of a toilet. In this embodiment, for the sake of convenience in the explanation, it is assumed that the casing 2 is non-rotatably connected to the toilet body and the connecting portion 3a of the rotor 3 is non-rotatably connected to the toilet lid. Accordingly, it is assumed that the casing 2 is non-rotatably fixed in position while the rotor 3 is rotatable with respect to the casing 2.

The toilet lid can be rotated through a range of about 120 degrees between a closed position in which the toilet lid is abutted against an upper surface of the toilet body and closes a top end opening of the toilet body and an open position in which the toilet lid is abutted against a tank mounted on a rear end portion of an upper portion of the toilet body. Accordingly, the rotor 3 is also rotatable between the closed position and the open position. However, when the rotary damper 1 is used as an independent unit, to be more specific, when the casing 2 and the rotor 3 are not connected to either one of the two members that are rotatably connected with respect to each other, the rotor 3 is capable of rotating slightly beyond the closed position and the open position, as described later. When used in a toilet, the rotary damper 1 is arranged such that axes of the casing 2 and the rotor 3 are horizontally oriented.

The rotor 3 is rotated together with the toilet lid. Therefore, a position of the rotor 3 when the toilet lid is in the closed position is also referred to as the closed position (first rotation position), and a position of the rotor 3 when the toilet lid is in the open position is also referred to as the open position (third rotation position). A direction in which the rotor 3 is rotated from the closed position to the open position is referred to as an opening direction (first direction) and a direction in which the rotor 3 is rotated from the open position to the closed position is referred to as a closing direction (second direction).

The rotor 3 includes a through hole (communication passage) 3d formed on the axis thereof. The through hole 3d extends from an upper end surface to a lower end surface of the rotor 3. A valve seat 3e having an annular configuration is formed in an inner peripheral surface of the through hole 3d. The valve seat 3e is composed of a part of a spherical surface centered on a rotation axis of the rotor 3. The valve seat 3e has a concave curved surface configuration. The valve seat 3e is positioned in an intermediate portion of the small-diameter portion 3c in the top-bottom direction.

A pair of cam surfaces (cam mechanism) 3f, 3f are formed in a lower end surface of the large-diameter portion 3b. The pair of cam surfaces 3f, 3f are symmetrically arranged with respect to the axis of the rotor 3. Each of the cam surfaces extends in a circumferential direction through a length of about 120 degrees. The small-diameter portion 3c includes first and second transverse holes 3g, 3h formed therein. The first and second transverse holes 3g, 3h extend from an outer peripheral surface of the small- diameter portion 3c to the inner peripheral surface of the through hole 3d. The first transverse hole 3g is positioned at a generally same location as the cam surface 3f in the top-bottom direction (direction of the axis of the rotor 3). Therefore, the first transverse hole 3g is located above the valve seat 3e. The second transverse hole 3h is located below the valve seat 3e.

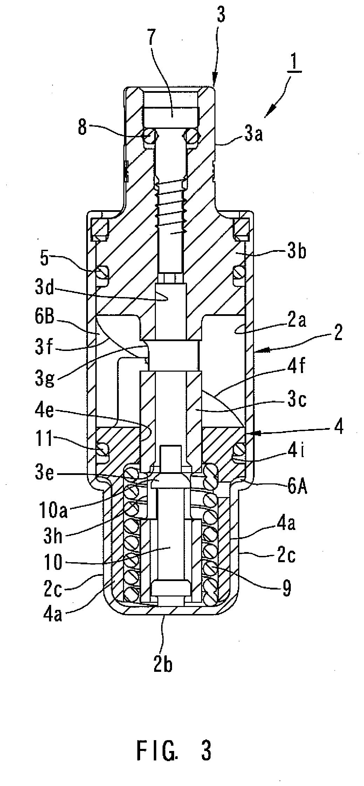

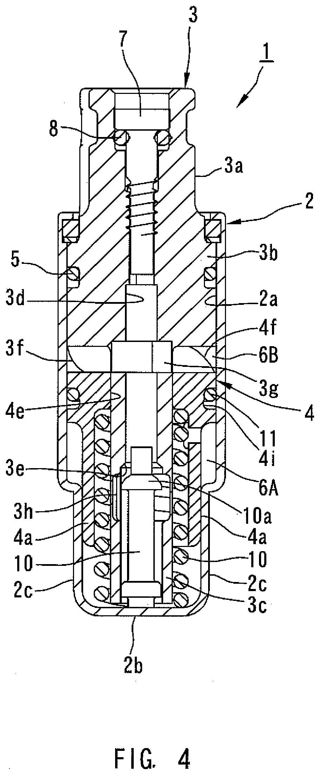

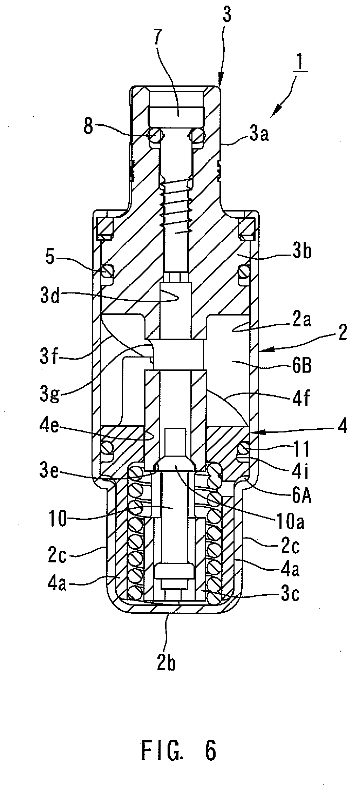

The piston 4 is received in a portion of the receiving hole 2a between the bottom portion 2b and the large-diameter portion 3b of the rotor 3 such that the piston 4 can be moved in the top-bottom direction (direction of the axis of the casing 2). The piston 4 can be moved between a first position shown in FIGS. 3 and 6 and a second position shown in FIG. 4. However, when the rotary damper 1 is used as an independent unit, the piston 4 can be moved slightly beyond the first position in a direction from the second position to the first position (downward). On the other hand, as described later, the piston 4 cannot be moved beyond the second position in a direction from the first position to the second position (upward). When the rotor 3 is in the closed position, the piston 4 is positioned at the first position. When the rotor 3 is rotated through a predetermined angle (standing angle of 80 to 90 degrees in this embodiment) from the closed position and reaches a standing position (second rotational position), the piston 4 is positioned at the second position.

The piston 4 disposed in the receiving hole 2a divides an inner space of the receiving hole 2a between the bottom portion 2b and the large-diameter portion 3b into a first chamber 6A in the bottom portion 2b side and a second chamber 6B in the large-diameter portion 3b side. The first chamber 6A and the second chamber 6B communicate with each other through the second transverse hole 3h, the through hole 3d and the first transverse hole 3g. In other words, the second transverse hole 3h, the through hole 3d and the first transverse hole 3g constitute a communication passage that allows the first chamber 6A and the second chamber 6B to communicate with each other. The first chamber 6A and the second chamber 6B are filled with fluid such as viscose fluid (not shown) introduced through the through hole 3d, the first transverse hole 3g and the second transverse hole 3h. The fluid such as viscose fluid can flow in the communication passage with little resistance. An opening of the through hole 3d is sealed with a plug body 7 threaded to the opening and a seal member 8.

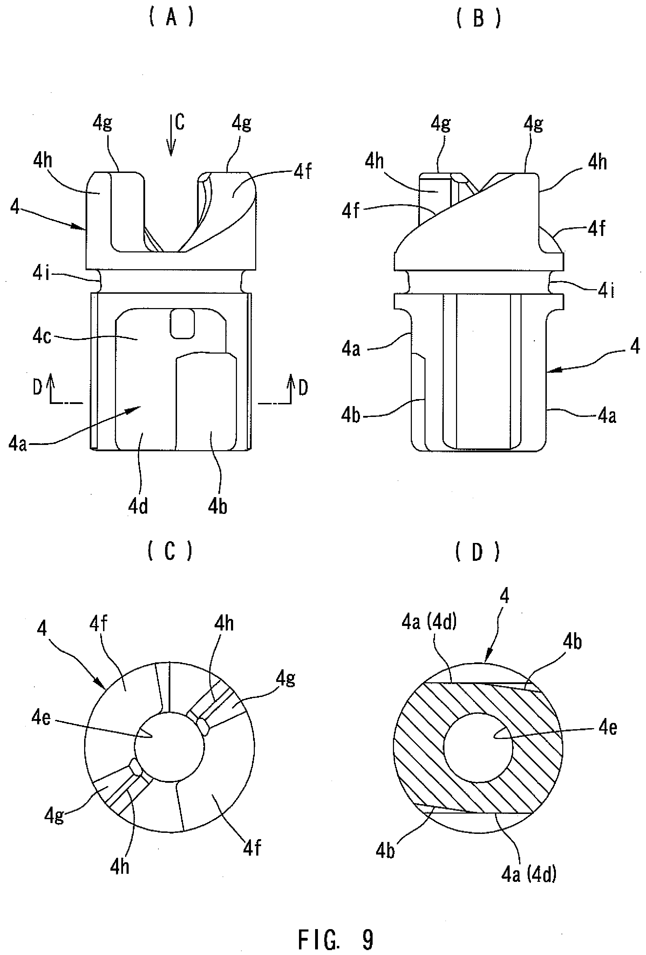

As shown in FIGS. 3 to 7 and 9, the piston 4 has a circular cross-sectional configuration. An outer diameter of the piston 4 is sized to be generally the same as an inner diameter of the receiving hole 2a. An upper portion of the piston 4 is slidably and rotatably fitted in a portion of the inner peripheral surface of the casing 2 that is located above the flat portions 2c. On the other hand, a pair of flat surface portions 4a, 4a extending upward from a lower end surface of the piston 4 are formed in a lower portion of the piston 4. The pair of flat surface portions 4a, 4a respectively slidably surface contact inner surfaces of the pair of the flat portions 2c, 2c of the casing 2. The piston 4 is not rotatable with respect to the casing 2 as long as portions of the flat surface portion 4a located in the opposite sides (opposite side portions to the left and right of the flat surface portion 4a in FIG. 9(A)) with respect to the axis of the piston 4 (axis of the casing 2) are contacted with the flat portion 2c.

An inclined surface portion 4b is formed in the flat surface portion 4a. The inclined surface portion 4b extends upward from the lower end surface of the piston 4. A length of the inclined surface portion 4b is shorter than a length of the flat surface portion 4a by a predetermined length. A one end (left end) of the inclined surface portion 4b in a width direction thereof (left-right direction in FIG. 9 (A)) is located at a center in a width direction of the flat surface portion 4a. In other words, the one end of the inclined surface portion 4b in the width direction intersects the flat surface portion 4a in a central portion of the flat surface portion 4a in the width direction. The other end of the inclined surface portion 4b in the width direction intersects an outer peripheral surface of the piston 4. As shown in FIG. 9(D), the inclined surface portion 4b is inclined with respect to the flat surface portion 4a such that the other end of the inclined surface portion 4b in the width direction is more spaced from the flat surface portion 4a toward the inner side of the piston 4 than the one end of the inclined surface portion 4b in the width direction.

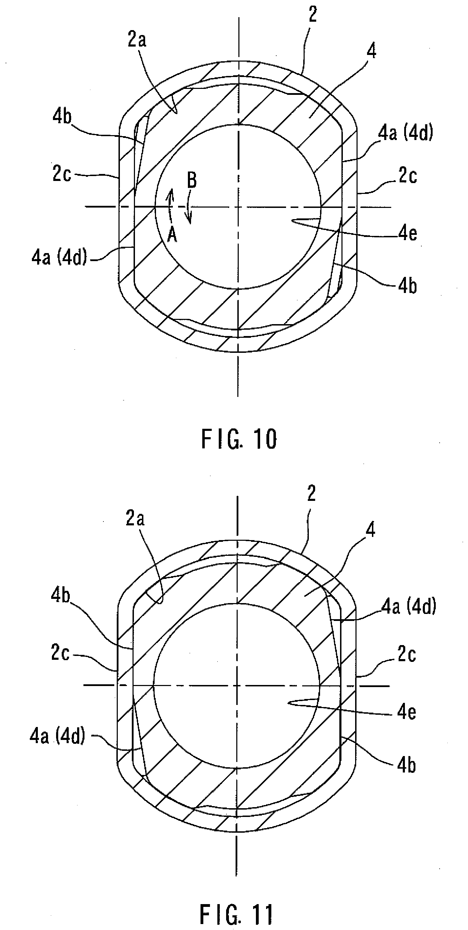

The flat surface portion 4a and the inclined surface portion 4b are contacted with and spaced from (the inner surface of) the flat portion 2c according to a position of the piston 4 in the axial direction of the casing 2 in the following manner. That is, when the piston 4 is positioned at the first position, a portion (referred to as a rotation restriction portion hereinafter) 4c of the flat surface portion 4a located above the inclined surface portion 4b is entirely contacted with the flat portion 2c in the width direction. Accordingly, when the piston 4 is positioned at the first position, the piston 4 is not rotatable with respect to the casing 2. The rotational position of the piston 4 at this time is an initial position. Although a contact length of the rotation restriction portion 4c with respect to the flat portion 2c in the top-bottom direction is reduced as the piston 4 is moved upward from the first position, the rotation restriction portion 4c is contacted with the flat portion 2c, thereby holding the piston 4 in a non-rotatable manner until the piston 4 reaches a position immediately before the second position. When the piston 4 reaches the second position, however, a lower end of the rotation restriction portion 4c generally coincides with an upper end of the flat portion 2c or is slightly spaced upward from the upper end of the flat portion 2c, and thus the entirety of the rotation restriction portion 4c is spaced upward from the flat portion 2c. In this condition, as shown in FIGS. 10 and 11, only the inclined surface portion 4b and a portion (referred to as a remaining portion hereinafter) 4d of the flat surface portion 4a other than the rotation restriction portion 4c are opposed to the flat portion 2c. Accordingly, when the piston 4 reaches the second position, as shown in FIG. 10, the piston 4 is prevented from being rotated in a direction from the remaining portion 4d toward the inclined surface portion 4b (direction of arrow A in FIG. 10) by the abutment of the remaining portion 4d against the flat portion 2c. However, as shown in FIG. 11, the piston 4 can be rotated in a direction from the inclined surface portion 4b toward the remaining portion 4d (direction of arrow B in FIG. 10) until the inclined surface portion 4b is abutted against the flat portion 2c. In other words, the piston 4 can be rotated through an inclination angle of the inclined surface portion 4b with respect to the flat surface portion 4a.

Here, the direction from the remaining portion 4d toward the inclined surface portion 4b coincides with the closing direction and the direction from the inclined surface portion 4b toward the remaining portion 4d coincides with the opening direction. Accordingly, when the piston 4 reaches the second position, the piston 4 becomes rotatable between the initial position and a terminal position spaced from the initial position by the inclination angle of the inclined surface portion 4b in the opening direction. However, even when the piston 4 reaches the second position, the piston 4 is not rotatable in the closing direction.

An insertion hole 4e is formed in the piston 4 on the axis of the piston 4 from an upper end surface to the lower end surface of the piston 4. The small-diameter portion 3c of the rotor 3 is rotatably and slidably inserted in an upper portion of the insertion hole 4e. A coil spring (biasing means) 9 is disposed in an annular space between an inner peripheral surface of the insertion hole 4e and the outer peripheral surface of the small-diameter portion 3c. A lower end portion of the coil spring 9 is abutted against the bottom portion 2b and an upper end portion of the coil spring 9 is abutted against the piston 4, thereby the coil spring 9 biasing the piston 4 toward the large-diameter portion 3b of the rotor 3.

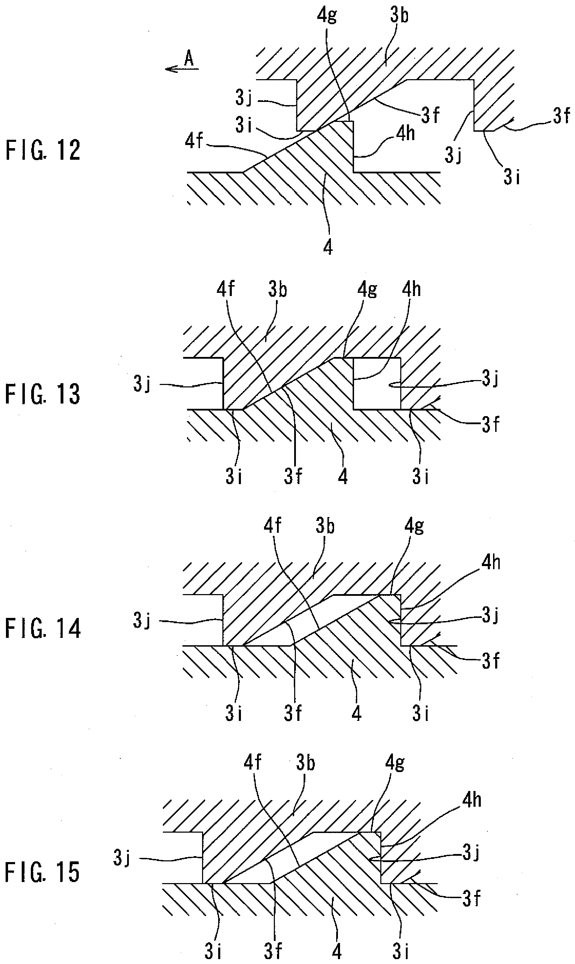

A pair of cam surfaces (cam mechanisms) 4f, 4f are formed in an upper end surface of the piston 4 opposed to the large-diameter portion 3b. The cam surface 4f is abutted against the cam surface 3f by the biasing force of the coil spring 9. A lower end portion of the cam surface 3f is contacted with an upper end portion of the cam surface 4f when the rotor 3 is in the closed position (see FIG. 12). The piston 4 is positioned at the first position at this time. The cam surfaces 3f, 4f allow the piston 4 to be moved in the direction from the first position toward the second position (upward) when the rotor 3 is rotated from the closed position in the opening direction (the direction of Arrow A in FIG. 12). Accordingly, when the rotor 3 is rotated in the opening direction, the piston 4 is moved from the first position side toward the second position side by the coil spring 9. The cam surfaces 3f, 4f cause the piston 4 to be moved from the second position side toward the first position side against the biasing force of the coil spring 9 when the rotor 3 is rotated in the closing direction.

The piston 4 can be moved downward beyond the first position until the lower end surface of the piston 4 is abutted against the bottom portion 2b, according to which the rotor 3 can be rotated through a slight angle (5 degrees, for example) beyond the closed position. However, when the rotary damper 1 is used in a toilet, as mentioned above, the abutment of the toilet lid against the toilet body prohibits the rotor 3 from being rotated beyond the closed position. Therefore, the piston 4 will not be moved downward beyond the first position.

As shown in FIGS. 12 to 15, the rotor 3 includes a first restriction surface 3i formed therein. The first restriction surface 3i extends from a lower end of the cam surface 3f in the opening direction. The first restriction surface 3i is composed of a flat surface disposed at a right angle with respect to the axis of the casing 2. On the other hand, the piston 4 includes a second restriction surface 4g formed therein. The second restriction surface 4g extends from an upper end of the cam surface 4f in the closing direction. The second restriction surface 4g is composed of a flat surface disposed at a right angle with respect to the axis of the casing 2. Abutment of the first restriction surface 3i against the upper end surface of the piston 4, abutment of the second restriction surface 4g against a lower end surface of the large-diameter portion 3b of the rotor 3 or respective abutment of the first and second restriction surfaces 3i, 4g against the upper end surface of the piston 4 and the lower end surface of the large-diameter portion 3b prohibits the piston 4 from being moved further upward. The piston 4 is positioned at the second position at this time. Therefore, the piston 4 cannot be moved upward beyond the second position. As mentioned above, when the piston 4 is moved from the first position to the second position, the rotor 3 is rotated from the closed position through 80 to 90 degrees to reach the standing position.

The rotor 3 includes a first abutment surface 3j formed therein. The first abutment surface 3j extends from a distal end of the first restriction surface 3i to the lower end surface of the large-diameter portion 3b. The first abutment surface 3j is formed at a right angle with respect to the first restriction surface 3i and faces the opening direction. The piston 4 includes a second abutment surface 4h formed therein. The second abutment surface 4h extends from a distal end of the second restriction surface 4g to the upper end surface of the piston 4. The second abutment surface 4h is formed at a right angle with respect to the second restriction surface 4g and faces the closing direction. The second abutment surface 4h is arranged such that when the piston 4 reaches the second rotation position accompanying the rotation of the rotor 3 to the standing position, the second abutment surface 4h is spaced from the first abutment surface 3j by a predetermined distance in the circumferential direction (see FIG. 13). Therefore, the rotor 3 can be rotated with respect to the piston 4 in the initial position through an angle (referred to as an abutment angle hereinafter) corresponding to a distance between the first abutment surface 3j and the second abutment surface 4h from the standing position (second rotation position) in the opening direction, The rotation position of the rotor 3 when the first abutment surface 3j is abutted against the second abutment surface 4h of the piston 4 in the initial position is a third rotation position (see FIG. 14). After the abutment of the first abutment surface 3j and the second abutment surface 4h against each other, the rotor 3 can be further rotated in the opening direction together with the piston 4 through the inclination angle of the inclined surface portion 4b with respect to the flat surface portion 4a (see FIG. 15). Here, the position of the rotor 3 at this time is referred to as a maximum rotation position. The maximum rotation position is beyond the open position by slight degrees (5 degrees, for example) in the direction from the closed position to the open position. Accordingly, when the rotary damper 1 is used in a toilet, the rotor 3 is not rotated up to the maximum rotation position, stopped at the open position located before the maximum rotation position by a predetermined angle.

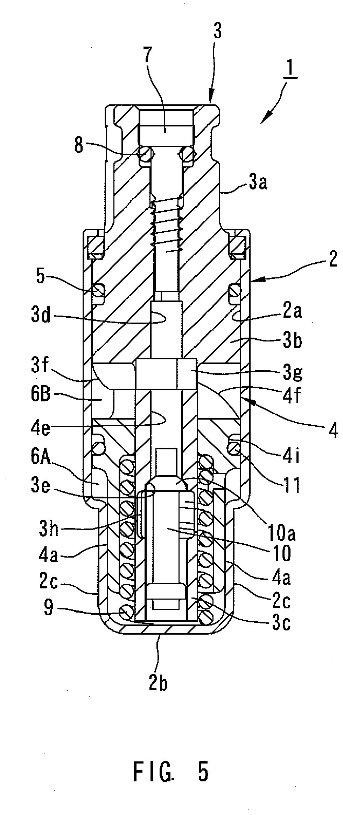

As shown in FIGS. 3 to 6, a valve body 10 is inserted in a portion of the through hole 3d located below the valve seat 3e such that the valve body 10 is movable in the top-bottom direction (longitudinal direction of the through hole 3d). The valve body 10 is movable between a closed-valve position shown in FIGS. 5 and 6 and an open-valve position shown in FIGS. 3 and 4. When the valve body 10 is positioned at the closed-valve position, a valve portion 10a of the valve body 10 is seated on the valve seat 3e, blocking the communication between a portion of the through hole 3d above the valve seat 3e and the portion of the through hole 3d below the valve seat 3e. As a result, the communication between the first chamber 6A and the second chamber 6B is blocked. On the other hand, when the valve body 10 is positioned at the open-valve position, the valve portion 10a is spaced downward from the valve seat 3e. As a result, the first chamber 6A and the second chamber 6B can communicate with each other through the through hole 3d.

Movement of the valve body 10 between the open-valve position and the closed-valve position is automatically performed accompanying the rotation of the rotor 3. That is, when the rotor 3 is rotated in the opening direction and the piston 4 is moved upward accompanying the rotation of the rotor 3, the fluid in the second chamber 6B flows into the first chamber 6A through the through hole 3d. The fluid flowing downward in the through hole 3d pushes the valve body 10 downward, causing the valve body 10 to be moved to the open-valve position. On the other hand, when the rotor 3 is rotated in the closing direction and the piston 4 is moved downward accompanying the rotation of the rotor 3, the fluid in the first chamber 6A flows into the second chamber 6B through the through hole 3d. The fluid flowing upward in the through hole 3d pushes the valve body 10 upward, causing the valve body 10 to be moved to the closed-valve position.

As shown in FIGS. 3 to 6, 9 and 16, a fitting recess 4i is formed in the outer peripheral surface of the piston 4. A seal member 11 such as an O-ring made of an elastic material is received in the fitting recess 4i. The seal member 11 is constantly press-contacted with a bottom surface of the fitting recess 4i and an inner peripheral surface of the receiving hole 2a by its own elasticity. By this arrangement, a gap between the outer peripheral surface of the piston 4 and the inner peripheral surface of the receiving hole 2a is sealed.

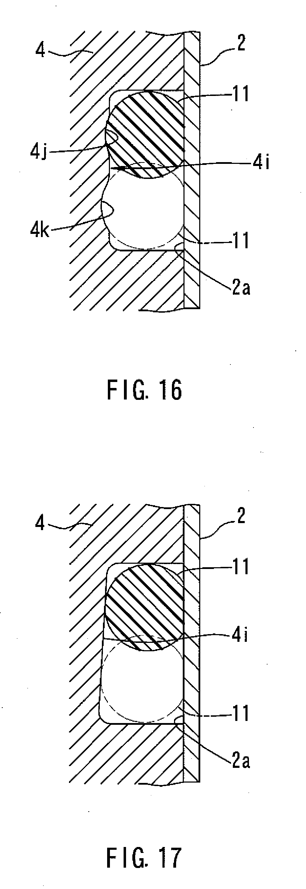

A width (width in the top-bottom direction in FIG. 16) of the fitting recess 4i is sized to be larger than an outer diameter of a cord member constituting the seal member 11. Accordingly, the seal member 11 is movable in the fitting recess 4i in a width direction by a difference between the width of the fitting recess 4i and the outer diameter of the cord member of the seal member 11. When the piston 4 is positioned at the first position, the seal member 11 is positioned in an upper end portion (end portion in the second chamber 6B side) of the fitting recess 4i such that the seal member 11 contacts an upper side surface of the fitting recess 4i. When the piston 4 is positioned at the second position, the seal member 11 is positioned in a lower end portion (end portion in the first chamber 6A side) of the fitting recess 4i such that the seal member 11 contacts a lower side surface of the fitting recess 4i.

A first recess portion 4j having a small depth is formed in an upper portion of the bottom surface of the fitting recess 4i. A bottom surface that defines the first recess portion 4j is composed of a circular arc surface having a curvature radius generally the same as that of a radius of the cord member of the seal member 11. Moreover, the first recess portion 4j is arranged such that when the piston 4 is positioned at the first position, an inner peripheral portion of the seal member 11 is tightly fitted in the first recess portion 4j without gap, i.e., the inner peripheral portion of the seal member 11 is contacted with the bottom surface defining the first recess portion 4j without gap. A second recess portion 4k having a small depth is formed in a lower portion of the bottom surface of the fitting recess 4i. A bottom surface that defines the second recess portion 4k is composed of a circular arc surface having the same curvature radius as the circular arc surface composing the bottom surface of the first recess portion 4j. Moreover, the second recess portion 4k is arranged such that when the piston 4 is positioned at the second position, the inner peripheral portion of the seal member 11 is tightly fitted in the second recess portion 4k without gap, i.e., the inner peripheral portion of the seal member 11 is contacted with the bottom surface defining the second recess portion 4k without gap. However, a center of curvature of the circular arc surface constituting the second recess portion 4k is located more inside than center of curvature of the circular arc surface constituting the first recess portion 4j in a radial direction of the piston 4. The depth (depth from the outer peripheral surface of the piston 4) of the second recess portion 4k is greater than the depth of the first recess portion 4j by a distance reflecting the difference between the position of the center of curvature of the first recess portion 4j and the position of the center of curvature of the second recess portion 4k. A portion of the bottom surface of the fitting recess 4i between the first recess portion 4j and the second recess portion 4k is configured as a cylindrical surface extending along the axis of the piston 4 (axis of the receiving hole 2a) or a tapered surface whose diameter is gradually reduced toward the second recess portion 4k from the first recess portion 4j.

When the seal member 11 is moved with respect to the casing 2 and the piston 4 in the top-bottom direction, the inner peripheral portion of the seal member 11 is slid with respect to the bottom surface of the fitting recess 4i (including the bottom surfaces constituting the first and second recess portions 4j, 4k) and an outer peripheral portion of the seal member 11 is slid with respect to the inner peripheral surface of the receiving hole 2a. As a result, friction resistance resisting the movement of the seal member 11 is generated between the seal member 11 and the bottom surface of the fitting recess 4i and between the seal member 11 and the inner peripheral surface of the receiving hole 2a. Here, the friction resistance generated between the seal member 11 and the inner peripheral surface of the receiving hole 2a can be made to be greater than the friction resistance generated between the seal member 11 and the bottom surface of the fitting recess 4i regardless of the position of the piston 4 in the top-bottom direction by making arrangements such as properly determining the dimensions of the seal member 11 and the depth of the fitting recess 4i, etc. Particularly, in this embodiment, the friction resistance generated between the seal member 11 and the inner peripheral surface of the receiving hole 2a is made to be greater than the friction resistance generated between the seal member 11 and the bottom surface of the fitting recess 4i by making a contact area of the outer peripheral portion of the seal member 11 with respect to the inner peripheral surface of the receiving hole 2a greater than a contact area of the inner peripheral portion of the seal member 11 with respect to the bottom surface of the fitting recess 4i. The friction resistance generated between the seal member 11 and the inner peripheral surface of the receiving hole 2a can be made to be greater than the friction resistance generated between the seal member 11 and the bottom surface of the fitting recess 4i by making a contact pressure of the outer peripheral portion of the seal member 11 with respect to the inner peripheral surface of the receiving hole 2a greater than a contact pressure of the inner peripheral portion of the seal member 11 with respect to the bottom surface of the fitting recess 4i.

In a case where the friction resistance generated between the seal member 11 and the inner peripheral surface of the receiving hole 2a is greater than the friction resistance generated between the seal member 11 and the bottom surface of the fitting recess 4i, when the piston 4 starts to be moved, the seal member 11 is relatively moved in the fitting recess 4i with respect to the piston 4 until the seal member 11 is abutted against the side surface of the fitting recess 4i facing a direction of movement of the piston 4. In other words, the seal member 11 is maintained in a stopped condition with respect to the inner peripheral surface of the receiving hole 2a from when the piston 4 starts to be moved until the seal member 11 is abutted against the side surface of the fitting recess 4i facing the direction of movement of the piston 4.

Let us assume that the toilet lid (rotor 3) is in the closed position (first rotation position) in a toilet in which the rotary damper 1 having the above-described features is used. At this time, the piston 4 is positioned at the first position, the valve body 10 is positioned at the open-valve position and the seal member 11 is positioned at an upper end portion of the fitting recess 4i (end portion in the second chamber 6B side). Furthermore, as shown in FIG. 12, a lower end portion of the cam surface 3f is abutted against an upper end portion of the cam surface 4f. When the toilet lid is in the closed position, the toilet lid is rotationally biased in the opening direction by the biasing force of the coil spring 9. However, the toilet lid is not rotated in the opening direction by the coil spring 9 since the rational biasing force of the coil spring 9 is smaller than a rotation moment generated by an own weight of the lid in the closed position.

When the toilet lid is manually rotated in the opening direction from the closed position, the piston 4 is moved from the first position toward the second position by the coil spring 9. At this time, according to the movement of the piston 4, the fluid in the second chamber 6B flows into the first chamber 6A through the though hole 3d. The fluid flows almost without resistance since the valve body 10 is positioned at the open-valve position. Therefore, the toilet lid can be rotated in the opening direction easily and at a high speed.

The piston 4 can be more easily moved at the beginning of the rotation of the toilet lid from the closed position since the seal member 11 is moved relatively downward according to the movement of the piston 4. To be more specific, if the seal member 11 were disposed in the piston 4 non-movably in the top-bottom direction, the piston 4 would have to be moved against the friction resistance generated between the seal member 11 and the inner peripheral surface of the receiving hole 2a when the piston 4 starts to be moved from the first position. Accordingly, a considerable transfer resistance is generated at the beginning of the movement of the piston 4, not allowing the toilet lid to be rotated easily in the opening direction. However, the piston 4 is not moved against the friction resistance generated between the seal member 11 and the inner peripheral surface of the receiving hole 2a. Rather, the piston 4 is moved only against the friction resistance generated between the seal member 11 and the bottom surface of the fitting recess 4i, which friction resistance is smaller than the friction resistance generated between the seal member 11 and the inner peripheral surface of the receiving hole 2a. Therefore, the piston 4 can be easily moved from the first position to the second position, thereby allowing the toilet lid to be easily moved from the closed position toward the open position. When the piston 4 is moved from the first position through a predetermined distance, the seal member 11 is abutted against the side surface of the fitting recess 4i facing the direction of movement of the piston 4, and then the seal member 11 and the piston 4 are moved together. At this time, the seal member 11 can be easily moved by an inertia of the piston 4 because the piston 4 has been moved when the seal member 11 is abutted against the piston 4. Therefore, the seal member 11 will not considerably disturb the movement of the piston 4.

When the toilet lid is rotated in the opening direction from the closed position through a predetermined angle (70 degrees, for example), a rotation moment generated by the coil spring 9 and the cam surfaces 3f, 4f becomes greater than the rotation moment in the closing direction generated by the own weight of the toilet lid. Therefore, after this point, the toilet lid is automatically rotated in the opening direction to a standing position. Arrangement may be made to make the rotation moment generated by the coil spring 9 always smaller than the rotation moment generated by the own weight of the toilet lid. In this case, the toilet lid should be manually rotated from the closed position to the standing position.

When the toilet lid (rotor 3) is rotated in the opening direction to the standing position (second rotation position), the piston 4 reaches the second position. At this time, as shown in FIG. 13, the first restriction surface 3i is abutted against the upper end surface of the piston 4 or the second restriction surface 4g is abutted against the lower end surface of the large-diameter portion 3b of the rotor 3. This prohibits the piston 4 from being moved upward, thereby causing the rotational biasing force not to be generated by the coil spring 9. As a result, the toilet lid and the rotor 3 are stopped at the standing position. Accordingly, the toilet lid can be prevented from being rotated to the open position and abutted against the tank by the biasing force of the coil spring 9. Therefore, the generation of a hitting sound can be prevented. When the toilet lid in the standing position is set free to be rotated, the toilet lid would be rotated to the closed position since the standing position is spaced from the closed position by 80 to 90 degrees. However, the rotation of the toilet lid in the closing direction is prohibited by the biasing force of the coil spring 9. The toilet lid is thus held at the standing position in a stopped condition.

The toilet lid is manually rotated in the opening direction from the standing position to the open position. When the toilet lid is rotated in the opening direction from the standing position, the rotor 3 is rotated in the opening direction. Accompanying the rotation of the rotor 3 in the opening direction from the standing position, the cam surfaces 3f, 4f are spaced from each other and the first and second abutment surfaces 3j, 4h are moved closer to each other. When the rotor is rotated through the abutment angle, the first abutment surface 3j is abutted against the second abutment surface 4h as shown in FIG. 14. Accordingly, after the abutment, the rotor 3 and the piston 4 are rotated together in the opening direction. When the toilet lid reaches the open position and stops there, the rotor 3 and the piston 4 are stopped at the open position located slightly before the maximum rotation position shown in FIG. 15. When the toilet lid is rotated in the opening direction from the standing position, the rotor 3 and the piston 4 are rotated together in the opening direction through an inclination angle of the inclined surface portion 4b. After that, only the rotor 3 may be rotated to the open position. In this case, the first and second abutment surfaces 3j, 4h will not be abutted against each other because the maximum rotation position of the rotor 3 is located more to the front than the open position in the opening direction by a predetermined angle.

At least one of the first restriction surface 3i and the second restriction surface 4g are formed to prevent the toilet lid from being abutted against the tank by the biasing force of the coil spring 9. If the rotor 3 were prohibited from being rotated by the prohibition of the movement of the piston 4 by the first or the second restriction surface 3i, 4g, a rotation range of the rotor 3 would be limited. However, in the rotary damper 1, the rotation range of the rotor 3 can be wide since the rotor 3 is rotatable in the opening direction through the predetermined abutment angle even after the piston 4 is stopped at the second position. Moreover, since the piston 4 can be rotated in the opening direction through the predetermined inclination angle from the initial position after the piston 4 reaches the second position, the rotation range of the rotor 3 can be even wider.

To move the toilet lid from the open position to the closed position, the toilet lid is first manually rotated from the open position in the closing direction. When the rotor 3 is rotated in the closing direction from the open position through a predetermined angle (abutment angle or an angle equal to the abutment angle minus the inclination angle), the cam surface 3f is abutted against the cam surface 4f. After the abutment, therefore, the rotor 3 and the piston 4 are rotated together in the closing direction to the standing position.

After reaching the standing position, the toilet lid is further rotated manually in the closing direction and reaches a position spaced from the closed position by a predetermined angle (70 degrees, for example, as mentioned above). After that, the toilet lid is rotated in the closing direction by its own weight to the closed position. When the toilet lid is rotated in the closing direction, the piston 4 is moved downward by the cam surfaces 3f, 4f against the biasing force of the coil spring 9. Accompanying the downward movement of the piston 4, the fluid in the first chamber 6A is moved to flow into the second chamber 6B. Consequently, the valve body 10 is moved upward by the fluid to be seated on the valve seat 3e. As a result, the through hole 3d that serves as a passage between the first chamber 6A and the second chamber 6B is closed. This causes the fluid in the first chamber 6A to flow into the second chamber 6B through a slight gap between the outer peripheral surface of the small-diameter portion 3c of the rotor 3 and the inner peripheral surface of the insertion hole 4e of the piston 4. The speed of the downward movement of the piston 4 is maintained at a low speed by a flow resistance of the fluid passing though the gap. This causes the rotational speed of the toilet lid in the closing direction to be maintained at a low level. Moreover, when the piston 4 is moved downward from the second position by a predetermined distance, the seal member 11 is moved to the upper end portion of the fitting recess 4i and is strongly press-contacted with the inner peripheral surface of the receiving hole 2a. This is because the depth of the first recess potion 4j is smaller than the depth of the second recess portion 4k. Accordingly, a big friction resistance is generated between the seal member 11 and the inner peripheral surface of the receiving hole 2a. This friction resistance also works to maintain the speed of the downward movement of the piston 4 at a low speed. While in the rotary damper 1 of this embodiment the slight gap between the outer peripheral surface of the small-diameter portion 3c and the inner peripheral surface of the insertion hole 4e of the piston 4 is used as a resistance passage between the first chamber 6A and the second chamber 6B, alternatively, the slight gap may be reduced to practically zero and an orifice as a resistance passage communicating with the first and second chambers 6A, 6B may be formed in the small-diameter portion 3c or the piston 4.

When the toilet lid reaches the closed position, the rotor 3 is stopped at the closed position and the piston 4 is stopped at the first position. While the piston 4 can be moved downward from the first position, the piston 4 will not be moved downward from the first position since the piston 4 is biased upward by the coil spring 9. The valve body 10 is positioned at the closed-valve position as shown in FIG. 6 immediately after the toilet lid reaches the closed position. However, when pressures in the first and second chambers 6A, 6B become generally equal to each other with the passage of a predetermined amount of time after the toilet lid reaches the closed position, the valve body 10 is moved downward by its own weight and is stopped at the open-valve position. This returns the rotary damper 1 to an initial condition as shown in FIG. 3.

Other embodiments of the receiving hole 2a, the fitting recess 4i and the seal member 11 according to the present invention will be described hereinafter. Only features different from the aforementioned embodiment will be described. The same reference numerals are used to designate the same elements as the aforementioned embodiment and the description thereof will be omitted.

FIG. 17 shows a second embodiment of the receiving hole 2a, the fitting recess 4i and the seal member 11. In the second embodiment, the bottom surface of the fitting recess 4i is formed as a tapered surface whose diameter is gradually reduced downward (from the second position side to the first position side). As a result, the depth of the fitting recess 4i is gradually increased downward. Therefore, the friction resistance generated between the seal member 11 and the inner peripheral surface of the fitting recess 4i is gradually reduced downward. Accordingly, the friction resistance generated between the seal member 11 and the inner peripheral surface of the fitting recess 4i is gradually reduced downward. Thus, the seal member 11 can be moved downward increasingly easily. Accordingly, the piston can be moved from the first position toward the second position increasingly easily to the same extent.

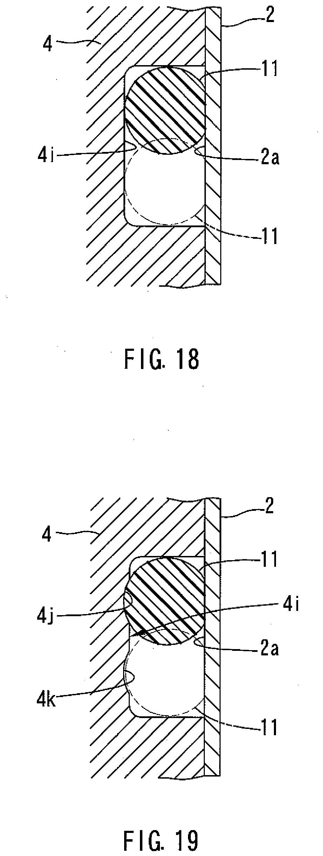

FIG. 18 shows a third embodiment of the receiving hole 2a, the fitting recess 4i and the seal member 11. In the third embodiment, the bottom surface of the fitting recess 4i is formed as a circular cylindrical surface whose axis is coincided with the axis of the piston 4. Accordingly, a diameter of the bottom surface of the fitting recess 4i is constant through the width direction. Therefore, contact pressure of the seal member 11 with the receiving hole 2a and contact pressure of the seal member 11 with the bottom surface of the fitting recess 4i are constant regardless of the position of the seal member 11. Therefore, sealing performance of the seal member 11 can be maintained constant.

FIG. 19 shows a fourth embodiment of the receiving hole 2a, the fitting recess 4i and the seal member 11. The fourth embodiment is a modification of the embodiment shown in FIG. 16. The depth of the second recess portion 4k is sized such that when the seal member 11 is contacted with the lower side surface of the fitting recess 4i, the bottom surface that defines the second recess portion 4k is spaced from the seal member 11 inward in the radial direction of the piston 4 by a slight distance. Accordingly, when the seal member 11 is positioned at a location near or in contact with the lower side surface of the fitting recess 4i, the friction resistance generated between the seal member 11 and the bottom surface of the fitting recess 4i (bottom surface of the second recess portion 4k) becomes zero. Moreover, the seal member 11 hardly seals the gap between the inner peripheral surface of the receiving hole 2a and the outer peripheral surface of the piston 4 when the seal member 11 is positioned at the location near or in contact with the lower side surface of the fitting recess 4i. It is when the piston 4 is moved from the first position toward the second position that the seal member 11 is positioned at the location near or in contact with the lower side surface of the fitting recess 4i, during which time the sealing by the sealing member 11 is not required. Therefore, the loss of sealing properties of the seal member 11 does not matter.

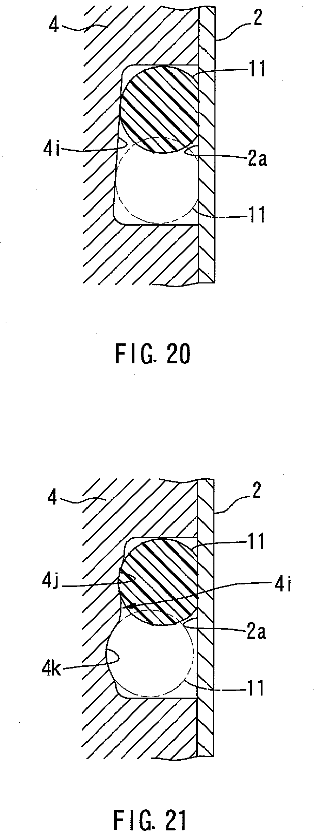

FIG. 20 shows a fifth embodiment of the receiving hole 2a, the fitting recess 4i and the seal member 11. The fifth embodiment is a modification of the embodiment shown in FIG. 17. Inner and outer diameters of the seal member 11 and a degree of taper of the bottom surface that defines the fitting recess 4i are determined such that when the seal member 11 is contacted with the lower side surface of the fitting recess 4i, the bottom surface that defines the fitting recess 4i is spaced from the seal member 11 inward in the radial direction of the piston 4 by a slight distance. Therefore, also in this embodiment, when the seal member 11 is contacted with the lower side surface of the fitting recess 4i, the friction resistance generated between the seal member 11 and the bottom surface of the fitting recess 4i becomes zero.

FIG. 21 shows a sixth embodiment of the receiving hole 2a, the fitting recess 4i and the seal member 11. The sixth embodiment is a modification of the embodiment shown in FIG. 16. When the seal member 11 enters the second recess portion 4k, the outer peripheral portion of the seal member 11 is slightly spaced from the inner peripheral surface of the receiving hole 2a. Therefore, in this embodiment, the friction resistance generated between the outer peripheral portion of the seal member 11 and the inner peripheral surface of the receiving hole 2a is greater than the friction resistance generated between the inner peripheral portion of the seal member 11 and the bottom surface of the fitting recess 4i (bottom surface of the first recess portion 4j) when the seal member 11 is positioned in the upper end portion of the fitting recess 4i. However, the friction resistance generated between the outer peripheral portion of the seal member 11 and the inner peripheral surface of the receiving hole 2a becomes zero and thus smaller than the friction resistance generated between the inner peripheral portion of the seal member 11 and the bottom surface of the fitting recess 4i (bottom surface of the second recess portion 4k) when the seal member 11 is positioned in the lower end portion of the fitting recess 4i. Also in this embodiment, when the piston 4 is moved from the second position toward the first position, causing the valve body 10 to be seated, thereby causing the fluid in the first chamber 6A to be pressed with a high pressure, the seal member 11 is moved upward by the fluid.

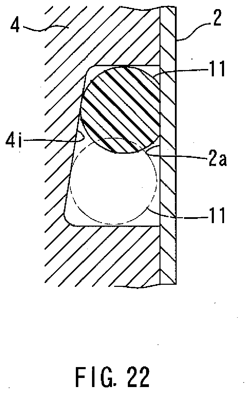

FIG. 22 shows a seventh embodiment of the receiving hole 2a, the fitting recess 4i and the seal member 11. The seventh embodiment is a modification of the embodiment shown in FIG. 17. The inner and outer diameters of the seal member 11 and the degree of taper of the bottom surface that defines the fitting recess 4i are determined such that when the seal member 11 is contacted with the lower side surface of the fitting recess 4i, the outer peripheral portion of the seal member 11 is spaced inward from the inner peripheral surface of the receiving hole 2a by a slight distance. Therefore, in this embodiment as well as the embodiment shown in FIG. 21, when the seal member 11 is positioned at the lower end portion of the fitting recess 4i, the friction resistance generated between the outer peripheral portion of the seal member 11 and the inner peripheral surface of the receiving hole 2a becomes zero, and thus smaller than the friction resistance generated between the inner peripheral portion of the seal member 11 and the bottom surface of the fitting recess 4i. Moreover, when the piston 4 is moved from the second position toward the first position, causing the valve body 10 to be seated, thereby causing the fluid in the first chamber 6A to be pressed with a high pressure, the seal member 11 is moved upward by the fluid.

Although particular embodiments of the invention have been described above, it will be understood that various modifications may be made without departing from the scope of the invention described herein.

For example, in the above-described embodiment, the rotation range of the rotor 3 is widened by adopting the two arrangements: i.e., making the rotor 3 rotatable with respect to the piston 4 through the abutment angle; and making the piston 4 rotatable though the inclination angle. Instead of adopting both of these arrangements, adopting only one may serve the purpose.

Moreover, while in the above-described embodiment, the cross-section of the seal member 11 in a natural state in which the seal member 11 is free from any effects by external forces is configured to be circular, the cross-section of the seal member 11 may be configured otherwise, elliptical, for example.

### INDUSTRIAL APPLICABILITY

The damper apparatus according to the present invention may be used as a damper apparatus disposed between the toilet body and the toilet lid for maintaining the rotation speed of the toilet lid in the closing direction at a low speed.

## Claims

1. A damper apparatus comprising:
a damper body (2) having a receiving hole (2a) formed therein;
a piston (4) movably disposed in the receiving hole (2a) and dividing an inner space of the receiving hole (2a) into a first chamber (6A) and a second chamber (6B);
fluid filled in the first chamber (6A) and the second chamber (6B);
a communication passage (3d) that communicates the first chamber (6A) with the second chamber (6B) and allows the fluid to flow in the communication passage (3d) substantially without resistance;
a valve mechanism (10) that opens the communication passage (3d) when the piston (4) is moved in a direction from the first chamber (6A) to the second chamber (6B) and closes the communication passage (3d) when the piston (4) is moved in a direction from the second chamber (6B) to the first chamber (6A);
a resistance passage that communicates the first chamber (6A) with the second chamber (6B) and provides the fluid flowing in the resistance passage with a predetermined amount of resistance;
a fitting recess (4i) formed in an outer peripheral surface of the piston (4) and extending annularly in a circumferential direction; and
a seal member (11) made of an elastic material and having an annular configuration, the seal member (11) received in the fitting recess (4i);
wherein:
a width of the fitting recess (4i) is sized to be greater than a width of the seal member (11) in a moving direction of the piston (4) so that the seal member (11) can be moved inside the fitting recess (4i) in the moving direction of the piston (4);
an outer peripheral portion of the seal member (11) is press-contacted with an inner peripheral surface of the receiving hole (2a) by an elasticity of the seal member (11) at least when the seal member (11) is positioned in an end portion of the fitting recess (4i) in the second chamber (6B) side; and wherein
a friction resistance generated between the outer peripheral portion of the seal member (11) and the inner peripheral surface of the receiving hole (2a) is greater than a friction resistance generated between an inner peripheral portion of the seal member (11) and a bottom surface of the fitting recess (4i), **characterized in that**:
the fitting recess (4i) and the seal member (11) are disposed separately from the valve mechanism (10).

2. A damper apparatus according to claim 1 wherein the outer peripheral portion of the seal member (11) is press-contacted with the inner peripheral surface of the receiving hole (2a) over an entire range of transfer of the seal member (11) and, at any point in the width direction of the fitting recess (4i), the friction resistance generated between the outer peripheral portion of the seal member (11) and the inner peripheral surface of the receiving hole (2a) is greater than the friction resistance generated between the inner peripheral portion of the seal member (11) and the bottom surface of the fitting recess (4i).

3. A damper apparatus according to claim 1 or 2 wherein a diameter of the bottom surface of the fitting recess (4i) is sized to be greater in one end side of the fitting recess (4i) than in the other end side of the fitting recess (4i) and the inner peripheral portion of the seal member (11) is press-contacted with the bottom surface of the fitting recess (4i) over the entire range of transfer of the seal member (11) by the elasticity of the seal member (11).

## Patentansprüche

1. Dämpfungseinrichtung, aufweisend:
ein Dämpfungsgehäuse (2) mit einer darin ausgebildeten Aufnahmeöffnung (2a);
einen Kolben (4), welcher in der Aufnahmeöffnung (2a) beweglich angeordnet ist und einen inneren Raum der Aufnahmeöffnung (2a) in eine erste Kammer (6A) und eine zweite Kammer (6B) unterteilt;
Fluid, welches in die erste Kammer (6A) und die zweite Kammer (6B) gefüllt ist;
einen Verbindungskanal (3d), welcher die erste Kammer (6A) mit der zweiten Kammer (6B) verbindet und es dem Fluid ermöglicht, in dem Verbindungskanal (3d) im Wesentlichen ohne Widerstand zu strömen;
einen Ventilmechanismus (10), welcher den Verbindungskanal (3d) öffnet, wenn der Kolben (4) in einer Richtung von der ersten Kammer (6A) zu der zweiten Kammer (6B) bewegt wird, und den Verbindungskanal (3d) schließt, wenn der Kolben (4) in einer Richtung von der zweiten Kammer (6B) zu der ersten Kammer (6A) bewegt wird;
einen Widerstandsdurchgang, welcher die erste Kammer (6A) mit der zweiten Kammer (6B) verbindet und für das Fluid, welches in dem Widerstandsdurchgang strömt, einen vorgegebenen Widerstandsbetrag vorsieht;
eine Montageausnehmung (4i), welche in einer äußeren Umfangsfläche des Kolbens (4) ausgebildet ist und sich ringförmig in einer Umfangsrichtung erstreckt; und
ein Dichtungselement (11), welches aus elastischem Material hergestellt ist und eine ringförmige Ausbildung aufweist, wobei das Dichtungselement (11) in der Montageausnehmung (4i) aufgenommen ist;
wobei:
eine Breite der Montageausnehmung (4i) bemessen ist, um größer als eine Breite des Dichtungselements (11) in einer Bewegungsrichtung des Kolbens (4) zu sein, so dass das Dichtungselement (11) innerhalb der Montageausnehmung (4i) in der Bewegungsrichtung des Kolbens (4) bewegt werden kann;
ein äußerer Umfangsabschnitt des Dichtungselements (11) mit einer inneren Umfangsfläche der Aufnahmeöffnung (2a) durch eine Elastizität des Dichtungselements (11) in Presskontakt steht, zumindest wenn das Dichtungselement (11) in einem Endabschnitt der Montageausnehmung (4i) auf der Seite der zweiten Kammer (6B) positioniert ist; und wobei
ein Reibungswiderstand, welcher zwischen dem äußeren Umfangsabschnitt des Dichtungselements (11) und der inneren Umfangsfläche der Aufnahmeöffnung (2a) erzeugt wird, größer als ein Reibungswiderstand ist, welcher zwischen einem inneren Umfangsabschnitt des Dichtungselements (11) und einer Bodenfläche der Montageausnehmung (4i) erzeugt wird, **dadurch gekennzeichnet, dass**:
die Montageausnehmung (4i) und das Dichtungselement (11) von dem Ventilmechanismus (10) getrennt angeordnet sind.

2. Dämpfungseinrichtung nach Anspruch 1, wobei der äußere Umfangsabschnitt des Dichtungselements (11) mit der inneren Umfangsfläche der Aufnahmeöffnung (2a) über einen gesamten Transferbereich des Dichtungselements (11) in Presskontakt steht, und an jedem Punkt in der Querrichtung der Montageausnehmung (4i) der Reibungswiderstand, welcher zwischen dem äußeren Umfangsabschnitt des Dichtungselements (11) und der inneren Umfangsfläche der Aufnahmeöffnung (2a) erzeugt wird, größer als der Reibungswiderstand ist, welcher zwischen dem inneren Umfangsabschnitt des Dichtungselements (11) und der Bodenfläche der Montageausnehmung (4i) erzeugt wird.

3. Dämpfungseinrichtung nach Anspruch 1 oder 2, wobei ein Durchmesser von der Bodenfläche der Montageausnehmung (4i) bemessen ist, um an einem Seitenende der Montageausnehmung (4i) größer zu sein als an dem anderen Seitenende der Montageausnehmung (4i), und der innere Umfangsabschnitt des Dichtungselements (11) mit der Bodenfläche der Montageausnehmung (4i) über den gesamten Transferbereich des Dichtungselements (11) durch die Elastizität des Dichtungselements (11) in Pressekontakt steht.

## Revendications

1. Appareil d'amortissement, comprenant:
un corps d'amortisseur (2) comportant un trou de réception (2a) formé dans celui-ci;
un piston (4) disposé de façon déplaçable dans le trou de réception (2a) et qui divise un espace intérieur du trou de réception (2a) en une première chambre (6A) et une seconde chambre (6B);
un fluide qui remplit la première chambre (6A) et la seconde chambre (6B);
un passage de communication (3d) qui met en communication la première chambre (6A) avec la seconde chambre (6B) et qui permet au fluide de s'écouler dans le passage de communication (3d) sensiblement sans résistance;
un mécanisme de soupape (10) qui ouvre le passage de communication (3d) lorsque le piston (4) est déplacé dans une direction depuis la première chambre (6A) vers la seconde chambre (6B), et qui ferme le passage de communication (3d) lorsque le piston (4) est déplacé dans une direction (6B) depuis la seconde chambre (6B) vers la première chambre (6A);
un passage de résistance qui met en communication la première chambre (6A) avec la seconde chambre (6B) et qui assure que le fluide s'écoule dans le passage de résistance avec un degré de résistance prédéterminé;
un évidement d'ajustement (4i) formé dans une surface périphérique extérieure du piston (4) et qui s'étend de façon annulaire dans une direction circonférentielle; et
un élément de joint (11) constitué d'un matériau élastique et qui présente une configuration annulaire, l'élément de joint (11) étant reçu dans l'évidement d'ajustement (4i);
dans lequel:
une largeur de l'évidement d'ajustement (4i) est dimensionnée de manière à être supérieure à une largeur de l'élément de joint (11) dans une direction de déplacement du piston (4) de telle sorte que l'élément de joint (11) puisse être déplacé à l'intérieur de l'évidement d'ajustement (4i) dans la direction de déplacement du piston (4);
une partie périphérique extérieure de l'élément de joint (11) est mise en contact par pression avec une surface périphérique intérieure du trou de réception (2a) par une élasticité de l'élément de joint (11) au moins lorsque l'élément de joint (11) est positionné dans une partie d'extrémité de l'évidement d'ajustement (4i) du côté de la seconde chambre (6B); et dans lequel
une résistance de frottement générée entre la partie périphérique extérieure de l'élément de joint (11) et la surface périphérique intérieure du trou de réception (2a) est supérieure à une résistance de frottement générée entre une partie périphérique intérieure de l'élément de joint (11) et une surface inférieure de l'évidement d'ajustement (4i),
**caractérisé en ce que** l'évidement d'ajustement (4i) et l'élément de joint (11) sont disposés séparément du mécanisme de soupape (10).

2. Appareil d'amortissement selon la revendication 1, dans lequel la partie périphérique extérieure de l'élément de joint (11) est mise en contact par pression avec la surface périphérique intérieure du trou de réception (2a) sur la totalité d'une plage de transfert de l'élément de joint (11) et, à n'importe quel point dans le sens de la largeur direction de l'évidement d'ajustement (4i), la résistance de frottement générée entre la partie périphérique extérieure de l'élément de joint (11) et la surface périphérique intérieure du trou de réception (2a) est supérieure à la résistance de frottement générée entre la partie périphérique intérieure de l'élément de joint (11) et la surface inférieure de l'évidement d'ajustement (4i).

3. Appareil d'amortissement selon la revendication 1 ou 2, dans lequel un diamètre de la surface inférieure de l'évidement d'ajustement (4i) est dimensionné de manière à être plus grand d'un premier côté d'extrémité de l'évidement d'ajustement (4i) que de l'autre côté d'extrémité de l'évidement d'ajustement (4i), et la partie périphérique intérieure de l'élément de joint (11) est mise en contact par pression avec la surface inférieure de l'évidement d'ajustement (4i) sur la totalité de la plage de transfert de l'élément de joint (11) par l'élasticité de l'élément de joint (11).
